(19) Europäisches Patentamt
European Patent Office
Office européen des brevets

(11) **EP 4 425 158 A1**

(12) **EUROPEAN PATENT APPLICATION**

(43) Date of publication:
**04.09.2024 Bulletin 2024/36**

(21) Application number: **23159987.9**

(22) Date of filing: **03.03.2023**

(51) International Patent Classification (IPC):
**G01N 23/20008** (2018.01)   **H01J 35/14** (2006.01)

(52) Cooperative Patent Classification (CPC):
**G01N 23/20008; H01J 35/153**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Malvern Panalytical B.V.**
**7602 EA Almelo (NL)**

(72) Inventors:
• **BECKERS, Detlef**
  **7602 EA Almelo (NL)**
• **MALYUTIN, Dmitriy**
  **5651 GH Eindhoven (NL)**
• **KHARCHENKO, Alexander**
  **7602 EA Almelo (NL)**

(74) Representative: **Elkington and Fife LLP**
**Prospect House**
**8 Pembroke Road**
**Sevenoaks, Kent TN13 1XR (GB)**

(54) **X-RAY ANALYSIS APPARATUS AND METHOD**

(57) The present invention relates to an X-ray analysis apparatus and an X-ray method for analysing a sample. The X-ray analysis apparatus includes an X-ray source comprising an anode and a cathode, and configured to irradiate an irradiated area on a target surface of the anode. The X-ray analysis apparatus further includes a steering arrangement, a processor and a controller. The steering arrangement is configured to position the irradiated area on the target surface of the anode. The processor is configured to receive X-ray analysis information, and to determine a change in position of the irradiated area on the target surface based on the X-ray analysis information. The controller is configured to control the steering arrangement to move the irradiated area on the target surface according to the change in position determined by the processor.

FIG. 1

EP 4 425 158 A1

**Description**

FIELD OF THE INVENTION

The present invention relates to an apparatus and method for X-ray analysis. In particular, embodiments relate to an X-ray analysis apparatus and method for precisely irradiating a sample.

BACKGROUND

X-ray analysis methods can be used to characterise materials. Typically, these methods involve generating X-rays using an X-ray tube including a cathode and an anode. The cathode emits an electron beam which is incident on a surface of the anode, thereby causing X-rays to be emitted from the irradiated area of the anode. The irradiated area of the anode is known as the focal spot. An X-ray optic can then be used to focus the emitted X-rays to a measurement spot on a material being characterised.

In some arrangements, the surface of the anode irradiated by the electron beam is inclined at an oblique angle with respect to the electron beam. In these arrangements, the size of the focal spot as viewed from a measuring device measuring the X-ray beam emitted from the X-ray tube (known as the "effective focal spot") is different to the size of the irradiated area of the anode. The size of the effective focal spot can be measured according to European Standard EN 12543: 1999 (parts 1 to 5).

In multiple X-ray analysis applications, a small effective focal spot is desirable. Micro-spot analysis applications (i.e., applications involving an effective focal spot size of less than 100 $\mu$m) can facilitate high resolution measurements. Examples of micro-spot analysis applications include: micro spot phase analysis, spot mapping, micro spot stress and texture analysis, and high-resolution thin film analysis. Micro-focus measurements are typically carried out using micro-focus X-ray tubes (X-ray tubes having an effective focal spot size of less than 100 $\mu$m).

X-ray measurements can be affected by unwanted shifts in the position of the measurement spot on the sample. This is particularly problematic for micro-focus applications where precise positioning of the measurement spot on the sample is important for ensuring that measurements are being made in respect of the intended region of the sample. These unwanted shifts can be caused by reconfiguration or adjustment of the X-ray analysis apparatus, for example.

Accordingly, there is a need to provide an improved X-ray analysis apparatus and method of X-ray analysis that facilitate precise positioning of the measurement spot on the sample.

SUMMARY

According to an aspect of the invention, there is provided an X-ray analysis apparatus comprising:

an X-ray source for irradiating a sample with X-rays, wherein the X-ray source comprises an anode for generating X-rays and a cathode for emitting an electron beam towards the anode to irradiate an irradiated area on a target surface of the anode;
a steering arrangement for positioning the irradiated area on the target surface of the anode;
a processor configured to receive X-ray analysis information, and to determine a change in position of the irradiated area on the target surface based on the X-ray analysis information; and
a controller configured to control the steering arrangement to move the irradiated area on the target surface according to the change in position determined by the processor.

The irradiated area of the target area is also known as the focal spot. The term "spot" in "focal spot" does not necessarily refer to a round shape, but may instead refer to any two-dimensional shape (e.g., a line focus). Herein, an X-ray source comprising an anode and a cathode within a sealed housing is also referred to as an X-ray tube. Controlling the steering arrangement to move the irradiated area based on X-ray analysis information (i.e., parameters relevant to the X-ray analysis set-up) facilitates improved X-ray measurements. Changing the position of the irradiated area in this way may be particularly useful when it is necessary to precisely measure the same region of a sample before and after adjustment to the X-ray analysis apparatus. For example, when it is necessary to measure the same region before and after movement of components of the X-ray analysis apparatus, or before and after a reconfiguration of the X-ray analysis apparatus - such as a replacement of a component. The change in position determined by the processor is a change in position of the irradiated area to be implemented - rather than one which has already occurred. The X-ray analysis apparatus may further comprise a focusing arrangement for focusing the electron beam from the cathode to the irradiated area on the target surface of the anode. The steering and focussing may be provided by the same X-ray analysis apparatus component (i.e., an arrangement configured to provide both steering and focusing functions). Alternatively, the steering and the focussing may be provided by different X-ray analysis apparatus components (i.e., steering and focussing may be provided by separate arrangements).

In some embodiments, the X-ray analysis information may comprise information about the position and/or orientation and/or type of at least one component of the X-ray analysis apparatus and/or information relating to the position of an X-ray focal spot on the sample.

The X-ray analysis information may comprise X-ray analysis apparatus information (i.e., parameters relevant to the X-ray analysis apparatus). For example, X-ray apparatus information may comprise information about the position, orientation, and/or type of a component of the X-ray analysis apparatus. This information may be used to determine how the irradiated area should be moved to provide improved X-ray measurements. The X-ray analysis apparatus information may further comprise information about other characteristics of X-ray analysis apparatus components. The X-ray analysis apparatus components may include: an X-ray optic arranged to receive X-rays from the X-ray source, a sample stage and/or and an incident arm for supporting at least the X-ray source. For example, the X-ray analysis apparatus information may comprise information relating to the acceptance angle of an X-ray optic.

The X-ray analysis apparatus may include a goniometer, a sample stage for supporting the sample, and/or an incident arm for supporting the X-ray source and an X-ray optic. The X-ray analysis apparatus information may comprise information about any characteristics of any these components. For example, the X-ray analysis apparatus information may comprise information relating to the orientation of the incident arm and/or the sample stage. The processor may be configured to determine a change in position of the irradiated area on the target surface based on the X-ray analysis information using an algorithm or a data structure.

In addition to or instead of X-ray analysis apparatus information, the X-ray analysis information may also comprise information relating to the position of the X-ray focal spot on the sample. The term "spot" in "X-ray focal spot" does not necessarily refer to a round shape, but may instead refer to any two-dimensional shape (e.g., a line focus).

In some embodiments, the steering arrangement may be a magnetic steering arrangement, and optionally wherein the magnetic steering arrangement may comprise a magnetic quadrupole arrangement or a magnetic dipole arrangement.

A magnetic quadrupole arrangement provides a magnetic field having a non-zero (and non-negligible) second order component (i.e., a quadrupole field). The magnetic field provided by a magnetic quadrupole arrangement may also comprise higher order components and a non-zero first order component. A magnetic dipole arrangement provides a magnetic field having a non-zero (and non-negligible) first order component (i.e., a dipole field). The magnetic field generated by the magnetic dipole arrangement may also comprise higher order components.

The inventors have realised that providing a magnetic steering arrangement in combination with an X-ray source provides particularly convenient steering of the electron beam. The magnetic quadrupole arrangement may also be used as a focussing arrangement for focusing the electron beam to the irradiated area on the target surface as well as a steering arrangement. In embodiments where the magnetic quadrupole arrangement is used as a focussing arrangement as well as a steering arrangement, the quadrupole arrangement is configured to provide a magnetic field having a first order component (dipole field) and a second order component (quadrupole field). In these embodiments the quadrupole arrangement is configured to provide a dipole field with a controllable direction and amplitude as well as a quadrupole field with a controllable amplitude. In some embodiments, the quadrupole arrangement may comprise a metal core having four poles, wherein, in use, the poles are arranged around the electron beam. Providing steering and focussing using the same magnetic quadrupole arrangement has the advantage that the arrangement is more compact.

In some embodiments, a magnetic dipole arrangement can be used to steer the electron beam in combination with a separate focusing arrangement for focussing the electron beam. In these embodiments, the focusing arrangement may be a magnetic quadrupole arrangement.

The magnetic dipole arrangement may comprise a first dipole magnet arranged in series with a second dipole magnet. Each dipole magnet may comprise a metal core and two poles (a dipole pair) arranged either side of the metal core to provide a dipole field with a controllable amplitude. The first and second dipole magnets may be arranged so that the dipole field provided by the first dipole magnet is perpendicular to the dipole field provided by the second dipole magnet. This facilitates steering of the electron beam in a first and second dimension. Alternatively, the magnetic dipole arrangement may comprise a single magnet comprising a metal core with four poles. In these embodiments, the magnetic dipole arrangement is configured to provide a dipole field with a controllable amplitude and direction to facilitate beam steering in two dimensions.

In some embodiments involving a magnetic steering arrangement, the magnetic steering arrangement may comprise a magnetic quadrupole arrangement and the magnetic quadrupole arrangement comprises four coils;

wherein each coil is electrically conductive; and
wherein the controller is configured to control the current and/or voltage supplied to each coil to move the irradiated area according to the change in position determined by the processor.

In some embodiments, steering of the electron beam in two independent dimensions and focussing of the electron beam is facilitated by providing three separate electromagnets (e.g.., a quadrupole core arranged in series with two dipole cores). When separate electromagnets are used, it is possible to provide particularly high-quality magnetic fields.

However, the inventors have realised that more convenient, controllable, focusing can be provided using a single quadrupole arrangement comprising four current carrying coils and a controller to control the current/voltage supplied to each coil. The controller may move the position of the irradiated area by applying a different voltage/current to at least one coil compared to another coil.

By providing a magnetic steering arrangement, it is possible to steer the electron beam using a steering arrangement positioned outside of the housing. This has the benefit of making the X-ray tube simpler, more cost-effective to manufacture and easier to repair.

In embodiments involving a magnetic steering arrangement, the X-ray analysis apparatus may further comprise:

> a sealed housing;
> wherein the cathode and anode are arranged within the sealed housing and the magnetic steering arrangement is arranged outside of the sealed housing.

In some embodiments, the irradiated area comprises a line focus, and optionally wherein the steering arrangement comprises a magnetic dipole field for changing the position of the line focus on the anode.

In some embodiments, the effective focal spot size may be less than 100 $\mu$m.

Micro-focus X-ray analysis (involving effective focal spots sizes of less than 100 $\mu$m, as measured according to the method for determining effective focal spot size provided in the description) facilitates high resolution measurements. The effective focal spot is the focal spot as viewed from a measuring device measuring the X-ray beam emitted from the X-ray tube.

In some embodiments, the processor may be configured to receive calibration data relating to the X-ray analysis;

> wherein the calibration data comprises a data structure that maps an input based on the X-ray analysis information to an adjustment output relating to the change in position;
> wherein the processor is configured to determine an adjustment output based on the X-ray analysis information and the calibration data, and output the adjustment output.

The data structure may, for example, comprise a look-up table. By using X-ray analysis information in combination with calibration data, it is possible to more accurately determine the change in position. The calibration data may have been pre-determined. For example, the calibration data may have been pre-determined in the factory where the X-ray analysis apparatus was manufactured. The calibration data may be specific to each X-ray source or X-ray analysis apparatus. Alternatively, the calibration data may be based on average data suitable for multiple systems.

The calibration data relating to the X-ray analysis may relate to the X-ray analysis apparatus or positions/intensities of the X-ray focal spot on the sample.

The adjustment output may be a control signal. In these embodiments it may be used directly as an input to the controller for controlling the steering arrangement.

Alternatively, the processor may be configured to generate the input to the controller based on the adjustment output. The controller may be configured to generate a control signal for controlling the steering arrangement based on this input from the processor.

Alternatively, something other than the processor generates the input to the controller based on the adjustment output. For example, in some embodiments the adjustment output is a prompt (e.g. a visual cue such as a message on a screen) for prompting the operator to adjust the X-ray analysis apparatus to control the steering (e.g. by selecting control options to be executed by the controller).

In some embodiments where the processor is configured to receive calibration data relating to the X-ray analysis, the X-ray analysis apparatus may further comprise a sample stage for supporting the sample, wherein the sample stage is rotatable;

> wherein the X-ray analysis information comprises information indicating the orientation of the sample stage;
> wherein the processor is configured to determine the adjustment output based on the orientation of the sample stage and the calibration data.

The orientation of the sample stage may also be referred to as the angular position of the sample stage. The orientation may be measured relative to a reference sample stage orientation/angular position. The sample stage may be rotatable relative to the horizontal axis (e.g. tiltable) and/or the vertical axis. The sample stage may have multiple axes of rotation. A rotatable sample stage can facilitate improved sample alignment. However, rotation of the sample stage can affect the position of the X-ray focal spot on the sample. The inventors have realised that these effects can be compensated for by moving the position of the irradiated area on the anode. In particular, the inventors have realised that by moving the irradiated area based on the sample stage and calibration data improved X-ray measurements can be facilitated.

In some embodiments, the X-ray apparatus may further comprise an X-ray optic arranged to receive X-rays from the X-ray source.

The X-ray optic may be a multi-layer X-ray mirror for providing two-dimensional focussing. A two-dimensional mirror, for example a two-dimensional double focusing X-ray mirror, can be used to provide a small focal spot on the sample.

In some embodiments, the X-ray apparatus may further comprise:

an X-ray optic arranged to receive X-rays from the X-ray source;
a sample stage for supporting the sample, and an incident arm for supporting the X-ray source and the X-ray optic;
wherein the incident arm is rotatable about the sample stage;
wherein the X-ray analysis information comprises information indicating the incident arm orientation;
wherein the processor is configured to receive calibration data relating to the X-ray analysis apparatus;
wherein the calibration data comprises a data structure that maps an input based on the X-ray analysis information to an adjustment output relating to the change in position; and
wherein the processor is configured to determine the adjustment output based on the information indicating the incident arm orientation and the calibration data, and output the adjustment output.

The orientation of the incident arm may also be referred to as the angular position of the incident arm. The orientation may be measured relative to a reference orientation/angular position of the incident arm. A rotatable incident arm comprising the X-ray source and X-ray optics facilitates variation of the incident angle of the X-ray beam. However, rotation of the incident arm can introduce shifts between the X-ray optic and X-ray source. The position and/or intensity of the X-ray focal spot on the sample can be affected by these shifts. The inventors have realised that the undesirable effects on the focal spot can be mitigated by compensating for the shifts, and that the shifts can be compensated for by moving the position of the irradiated area on the anode. In particular, the inventors have realised that improved X-ray measurements can be obtained whilst enabling variation of the incident angle of the X-ray beam by moving the irradiated area based on calibration data and information relating to the incident arm orientation.

In some embodiments, the X-ray apparatus may further comprise:

an X-ray optic arranged to receive X-rays from the X-ray source;
a goniometer comprising a sample stage for supporting the sample and an incident arm for supporting the X-ray source and the X-ray optic;
wherein the sample stage is rotatable about a first axis of rotation, and the incident arm is rotatable about a second axis of rotation;
wherein the X-ray analysis information comprises information indicating the orientation of the sample stage about the first rotation axis, and the incident arm orientation about the second rotation axis;
wherein the processor is configured to receive calibration data relating to the X-ray analysis apparatus;
wherein the calibration data comprises a data structure that maps an input based on the X-ray analysis information to an adjustment output relating to the change in position; and
wherein the processor is configured to determine the adjustment output based on the orientation of the sample stage, the orientation of the incident arm, and the calibration data; and output the adjustment output.

A goniometer having two axes of rotation facilitates sample orientation relative to the X-ray beam. Ideally, these two axes intersect, and the point of intersection remains constant with respect to the orientation of the sample stage and incident arm. In this ideal situation, the first and second rotation axes exactly share a fixed point of rotation. However, in practice, there is typically a small gap between the axes such that they do not intersect and the axes do not share a fixed point of rotation. This means that rotation of the sample stage and/or rotation of the incident arm will cause an unwanted variation in the position of the X-ray focal spot on the sample. The inventors have realised that this undesirable variation can be compensated for by moving the position of the irradiated area on the anode. In particular, the inventors have realised that moving the irradiated area based on the sample stage orientation, the incident arm orientation and the calibration data facilitates improved X-ray measurements.

In some embodiments involving an X-ray optic, the processor may be configured to determine the change in position of the irradiated area on the target surface by receiving, as an input, X-ray analysis information relating to an X-ray flux through the X-ray optic, and determining, as an output, a change in position corresponding to an increase in X-ray flux through the X-ray optic.

Accordingly, the determined change in position of the irradiated area on the target surface corresponding to an increase in X-ray flux through the X-ray optic. Apparatus misalignment may cause the X-ray flux through the X-ray optic to be sub-optimal. The inventors have realised that controlling the steering arrangement to move the irradiated area based on X-ray analysis information relating to an X-ray flux through the X-ray optic can help to compensate for apparatus misalignment, thereby providing improved X-ray measurements. In particular, by providing a processor configured to determine a change in position based on the X-ray analysis information such that the X-ray flux through the X-ray optic is increased, it is possible to provide a higher intensity of X-rays incident on the sample.

In some embodiments involving an X-ray optic, the X-ray optic may be interchangeably coupled to the X-ray source.

Providing an interchangeable X-ray optic means that the X-ray source and X-ray optics are not permanently coupled, thereby providing a more flexible apparatus. In particular, this means that the X-ray analysis apparatus can be conveniently used for a broad range of X-ray analysis applications.

In some embodiments, the processor is configured to determine the change in position of the irradiated area on the target surface by receiving, as an input, X-ray analysis information relating to the position of an X-ray focal spot on the sample, and determining, as an output, a change in position of the irradiated area on the target surface based on the position of the X-ray focal spot on the sample.

Controlling the steering arrangement to move the irradiated area based on the position of a focal spot on the sample facilitates compensation of unwanted variation in the focal spot position, thereby providing improved X-ray analysis measurements. The processor may be configured to compare the position of the focal spot on the sample with a desired position on the sample. The controller may be configured to control the steering arrangement to move the irradiated area on the target surface so that focal spot on the sample is moved to the desired position.

In some embodiments, the X-ray analysis apparatus may further comprise a storage device for storing the calibration data. By providing a storage device as part of the X-ray analysis apparatus, the calibration data for that specific apparatus can be conveniently stored, allowing accurate positioning of irradiated area.

According to another aspect of the invention, there is provided a computer implemented method for controlling an X-ray analysis apparatus configured to focus an electron beam to an irradiated area on a target surface comprising:

> receiving, by a processor, X-ray analysis information;
> determining, by the processor, a change in position of the irradiated area;
> executing, by a controller, a control signal for controlling a steering arrangement such that the position of the irradiated area is changed according to the change in position determined by the processor.

In some embodiments, the computer implemented method for controlling an X-ray analysis apparatus configured to focus an electron beam to an irradiated area on a target surface may further comprise:
controlling, by a controller, a steering arrangement such that the position of the irradiated area is changed according to the change in position determined by the processor.

In some embodiments, the computer implemented method for controlling an X-ray analysis apparatus may further comprise:
determining, by the processor, the change in position of the irradiated area on the target surface by receiving, as an input, X-ray analysis information relating to an X-ray flux through the X-ray optic, and determining, as an output, a change in position corresponding to an increase in X-ray flux through the X-ray optic.

In some embodiments, the computer implemented method for controlling an X-ray analysis apparatus may further comprise:

> receiving calibration data relating to the X-ray analysis by the processor;
> wherein the calibration data comprises a data structure that maps an input based on the X-ray analysis information to an adjustment output relating to the change in position;
> determining, by the processor, an adjustment output based on the X-ray analysis information and the calibration data; and
> outputting, by the processor, the adjustment output.

In some embodiments, the computer implemented method for controlling an X-ray analysis apparatus may further comprise generating, by the controller, the control signal based on the adjustment output. Alternatively, the adjustment output may be used directly as the control signal. Alternatively, the processor generates the input to the controller based on the adjustment output. Alternatively, something other than the processor (e.g. an operator) generates the input to the controller based on the adjustment output.

In some embodiments, the computer implemented method for controlling an X-ray analysis apparatus wherein the X-ray analysis apparatus further comprises:

an X-ray optic arranged to receive X-rays from the X-ray source;
a sample stage for supporting the sample, and an incident arm for supporting the X-ray source and the X-ray optic;
wherein the incident arm is rotatable about the sample stage; and
wherein the X-ray analysis information comprises information indicating incident arm orientation;
the computer implemented method may further comprise:

receiving, by the processor calibration data relating to the X-ray analysis apparatus;
wherein the calibration data comprises a data structure that maps an input based on the X-ray analysis information to an adjustment output relating to the change in position;
determining, by the processor, the adjustment output based on the information indicating incident arm orientation and the calibration data, and
outputting, by the processor, the adjustment output.

In embodiments involving calibration data and the determination of an adjustment output, the computer implemented method for controlling an X-ray analysis apparatus wherein the X-ray analysis apparatus comprises:

a sample stage for supporting the sample, wherein the sample stage is rotatable; and
wherein the X-ray analysis information comprises information indicating the orientation of the sample stage;
the computer implemented method may further comprise:
determining, by the processor, the adjustment output based on the orientation of the sample stage and the calibration data.

In some embodiments, the computer implemented method for controlling an X-ray analysis apparatus wherein the X-ray analysis apparatus comprises:

an X-ray optic arranged to receive X-rays from the X-ray source;
a goniometer comprising a sample stage for supporting the sample and an incident arm for supporting the X-ray source and the X-ray optic;
wherein the sample stage is rotatable about a first axis of rotation, and the incident arm is rotatable about a second axis of rotation;
wherein the X-ray analysis information comprises information indicating the orientation of the sample stage about the first rotation axis, and the orientation of the incident arm about the second rotation axis;
the computer implemented method may further comprise:

receiving, by the processor calibration data relating to the X-ray analysis apparatus;
wherein the calibration data comprises a data structure that maps an input based on the X-ray analysis information to an adjustment output relating to the change in position;
determining, by the processor, the adjustment output based on the orientation of the sample stage, the orientation of the incident arm, and the calibration data; and
outputting the adjustment output.

In some embodiments of the computer implemented method for controlling an X-ray analysis apparatus wherein the steering arrangement is a magnetic steering arrangement, and wherein the magnetic steering arrangement comprises a magnetic quadrupole arrangement,

wherein the magnetic quadrupole arrangement comprises four coils, and wherein each coil is electrically conductive;
the computer implemented method may further comprise:
controlling, by the controller, the current and/or voltage supplied to each coil to move the irradiated area according to the change in position determined by the processor.

In some embodiments of the computer implemented method for controlling an X-ray analysis apparatus wherein the steering arrangement is a magnetic steering arrangement, and wherein the magnetic steering arrangement comprises a magnetic dipole arrangement,

wherein the magnetic dipole arrangement comprises two coils, and wherein each coil is electrically conductive;
the computer implemented method may further comprise:
controlling, by the controller, the current and/or voltage supplied to each coil to move the irradiated area according to the change in position determined by the processor.

In some embodiments of the computer implemented method for controlling an X-ray analysis apparatus wherein the steering arrangement is a magnetic steering arrangement, and wherein the magnetic steering arrangement comprises a magnetic dipole arrangement,

wherein the magnetic dipole arrangement comprises four coils, and wherein each coil is electrically conductive; the computer implemented method may further comprise:
controlling, by the controller, the current and/or voltage supplied to each coil to move the irradiated area in two dimensions according to the change in position determined by the processor.

In some embodiments, the computer implemented method for controlling an X-ray analysis apparatus may further comprise:
determining, by the processor, the change in position of the irradiated area on the target surface by receiving, as an input, X-ray analysis information relating to the position of an X-ray focal spot on the sample, and determining, as an output, a change in position of the irradiated area on the target surface based on the position of the X-ray focal spot on the sample.

In some embodiments of the computer implemented method for controlling an X-ray analysis apparatus, the X-ray analysis apparatus is the X-ray analysis apparatus according to any embodiment described herein.

According to another aspect of the invention, there is a computer program product comprising instructions which, when the program is executed by a computer, cause the computer to carry out the steps of any of the above-mentioned methods.

BRIEF DESCRIPTION OF THE DRAWINGS

Embodiments of the present invention will now be described, by way of example, with reference to the accompanying drawings, in which:

Figure 1 is a schematic diagram illustrating an X-ray analysis apparatus according to an embodiment of the invention;
Figure 2 is a schematic diagram illustrating an X-ray analysis apparatus according to another embodiment of the invention;
Figure 3 is a schematic diagram illustrating an X-ray analysis apparatus according to another embodiment of the invention;
Figure 4 illustrates a method of X-ray analysis according to an embodiment of the invention;
Figure 5 illustrates a method of X-ray analysis according to another embodiment of the invention;
Figures 6A-6B illustrate unwanted variation in the position of the X-ray focal spot on the sample;
Figures 7A-7B illustrate movement of the irradiated area over the X-ray anode;
Figure 8 illustrates an arrangement for measuring the size of the effective focal spot of an X-ray tube;
Figure 9 illustrates a line scan of a test object taken in the length direction, for measuring the length of the effective focal spot.

It should be noted that these figures are diagrammatic and not drawn to scale. Relative dimensions and proportions of parts of these figures have been shown exaggerated or reduced in size, for the sake of clarity and convenience in the drawings.

DETAILED DESCRIPTION

The invention provides an X-ray analysis apparatus for analysing a sample. The X-ray analysis apparatus includes an X-ray source comprising an anode and a cathode. The cathode is for emitting an electron beam towards the anode to irradiate an irradiated area on a target surface of the anode. The X-ray analysis apparatus further includes a steering arrangement, a processor and a controller. The steering arrangement is configured to position the irradiated area on the target surface of the anode. The processor is configured to receive X-ray analysis information, and to determine a change in position of the irradiated area on the target surface based on the X-ray analysis information. The controller is configured to control the steering arrangement to move the irradiated area on the target surface according to the change in position determined by the processor.

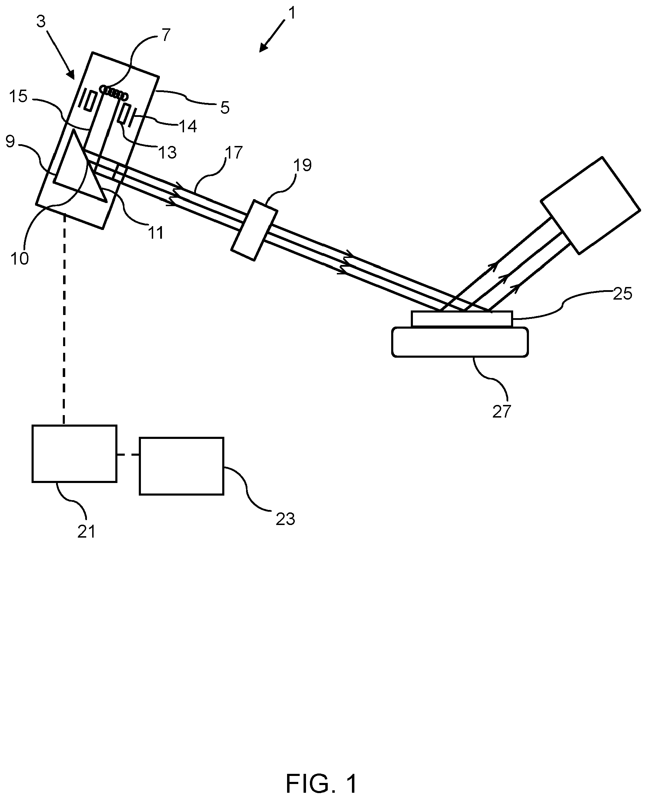

Figure 1 shows an X-ray analysis apparatus 1 according to an embodiment of the invention including an X-ray source 3 (i.e., an X-ray tube), a steering arrangement 13, a focussing arrangement 14, an X-ray optic 19, a processor 21, a controller 23, and a sample holder 27. The X-ray source 3 includes a cathode 7 and an anode 9 enclosed in a sealed housing 5. In use, the cathode 7 emits an electron beam which is incident on a target surface 11 of the anode 9, thereby irradiating an irradiated area 10 of the anode.

The steering arrangement 13 is located inside the housing 5, between the anode 9 and the cathode 7, and is operable to influence the electron beam 15 such that the position of the irradiated area 10 on the target surface 11 is changed. The focussing arrangement 14 is also located inside the housing 5 and is configured to focus the electron beam 15 from the cathode 7 to the irradiated area 10 on the target surface 11 of the anode 9.

The anode 9 is configured to emit X-rays. The housing 5 includes a window arranged to allow some X-rays emitted by the anode to exit the housing 5 as a beam of X-rays 17. The X-ray analysis apparatus 1 further comprises an X-ray optic 19 arranged to receive X-rays 17 from the X-ray source 3. A sample 25 is positioned on the sample holder 27. X-rays are scattered and/or diffracted by the sample 25.

The processor 21 is configured to receive X-ray analysis information and to determine a change in position of the irradiated area 10 based on this information. The controller 23 is configured to control the steering arrangement 13 to move the irradiated area 10 according to the change in position determined by the processor 21. The dashed lines between the processor 21, X-ray tube 3 and controller 23 represent communication between these features. In this embodiment, the processor 21 is configured to determine an output, based on the determined change in position, to be used as an input the controller 23. The controller 23 is configured to execute a control signal for controlling the steering arrangement 13 based on this input. In this way, the steering arrangement is controlled to move the irradiated area 10 according to the determined change in position.

For example, the X-ray analysis information may comprise information indicating the type of X-ray optic 19. In this example, the processor 21 is configured to determine a change in position of the irradiated area 10 based on the type of X-ray optic 19. This determination may be based on a data structure mapping the type of X-ray optic 19 to a direction and amount by which the irradiated area should be moved. In this example, the controller 23 is configured to accept the direction and amount as an input and generate a control signal in terms of voltage/current values for controlling a magnetic steering arrangement 13 comprising coils in order to move the position of the irradiated area 10 on the anode 9. This change in position of the irradiated area 10 on the anode 9 results in a change of position of the focal spot on the sample 25.

In some embodiments, the controller is configured to generate a control signal based on the output from the processor. In other embodiments, the output from the processor can be used directly as a control signal. Alternatively, the control signal may be generated in a different manner. For example, an operator may generate the control signal, based on the output from the processor, to be used as an input to the controller.

In some embodiments, the X-ray analysis information comprises information relating to the position and/or orientation and/or type of at least one X-ray analysis apparatus component. For example, the X-ray analysis information may comprise the type of X-ray optic 19, the type of focusing arrangement, and/or information indicating the type of X-ray tube (e.g., the model of the X-ray tube). In some embodiments, the X-ray analysis information indicates the relative orientation and/or positioning of the X-ray source 3 and the sample stage 27. The inventors have realised that these factors in particular can affect the X-ray flux passing through the X-ray optic 19. In particular, the orientation/position of the X-ray source 3 and sample stage 27 can affect the relative positioning of the X-ray optic 19 and the anode 9, thereby affecting the flux through the X-ray optic 19. The type of X-ray optic 19 used can also influence the X-ray flux passing through the X-ray optic 19. Different X-ray optics 19 can have different acceptance angles (i.e., different X-ray optics can have different maximum angles of incidence of X-rays at the X-ray optic 19 relative to the optical axis of the X-ray optic 19). Only X-rays incident at the X-ray optic 19 within an acceptance region defined by the acceptance angle will pass through the X-ray optic 19. For an X-ray optic 19 with a relatively large acceptance angle (such as a pinhole) the flux through the X-ray optic 19 is relatively unaffected by small degrees of system misalignment. Conversely, for an X-ray optic 19 with a relatively small acceptance angle (such as a multi-layer X-ray mirror for providing two-dimensional focussing) small degrees of system misalignment can significantly reduce the flux through the X-ray optic 19 compared to a well aligned system. By moving the irradiated area 10 on the target surface 11, the X-ray beam 17 emitted from the anode 9 can be moved into (or further within) the acceptance region of the X-ray optic 19 so the X-ray flux passing through the X-ray optic 19 is increased. In some embodiments, the X-ray analysis information may include the intensity of an X-ray focal spot on the sample. This intensity information may be detected using a fluorescent object (e.g., a disc) mounted at the sample position and using a camera system to determine the intensity of light emitted from a region of the fluorescent object irradiated by the X-rays. Alternatively, the intensity information may be detected using the intensity output from an X-ray detector arranged to receive scattered and/or diffracted X-rays from the sample 25. The X-ray focal spot intensity on the sample can be used to provide an indication of the amount of X-ray flux through the X-ray optic.

In some embodiments, the X-ray analysis information comprises information relating to the position of the X-ray focal spot on the sample. This position may be detected using a fluorescent object (e.g., a disc) mounted at the sample position and using a camera system to determine the position of an irradiated region of the fluorescent object. Alternatively, in some embodiments, a "patterned" sample can be used (i.e., a sample comprising a target area, wherein the target area reflects incident X-rays and is small relative to the total area of the sample). The beam can be steered until X-rays reflected from this target area are detected. The processor may determine that the position of the focal spot on the sample should be changed, and determine a change in the position of the irradiated area on the anode to provide the desired movement of the X-ray focal spot.

In some embodiments, the anode 9 is a solid anode. In some embodiments, the cathode 7 is a wound tungsten filament and the anode 9 comprises copper. However, either or both of the anode 9 and the cathode 7 may comprise alternative materials. Any metal and some non-metals may be used for the anode 9 and/or the cathode 7. For example, the anode 9 may comprise copper, cobalt, chromium, molybdenum, silver, gold, rhodium, iron, tungsten or alloys thereof, such as copper molybdenum. The cathode 7 may comprise tungsten, coated tungsten, copper, or a similar material having a high atomic number.

The steering arrangement 13 is a magnetic steering arrangement for providing magnetic steering of the electron beam. For example, the magnetic steering may be a magnetic dipole arrangement which provides a dipole field. The magnetic dipole arrangement may comprise a magnetic dipole core surrounding the electron beam 15. The magnetic dipole arrangement will generally comprise electrically conductive coils.

In these embodiments the controller23 may be configured to control the current and/or voltage supplied to each coil to provide a dipole field within the X-ray tube. The current and/or voltage supplied to each coil can be controlled to move the irradiated area 10 according to the change in position determined by the processor 21. The magnetic dipole arrangement may be configured to provide movement of the electron beam 15 in a first dimension (i.e. in the positive and negative directions) and/or a second dimension.

In some embodiments, an arrangement configured to produce a magnetic quadrupole field using electrically conducting coils may be controlled to provide a dipole field by controlling the voltage and/or current supplied to the coils.

In the embodiment shown at figure 1, the steering arrangement 13 is used in combination with the focussing arrangement 14. The focussing arrangement may comprise at least one metal grid. The skilled person will understand that a plurality of metal grids may be used, or an alternative type of focusing device could be used (i.e., the focussing arrangement may provide focussing using an alternative means to the metal grids).

The inventors have realised that controlling the steering arrangement 13 to move the irradiated area 10 based on X-ray analysis information facilitates improved X-ray analysis, and in particular can facilitate the precise measurement of a specific region of the sample.

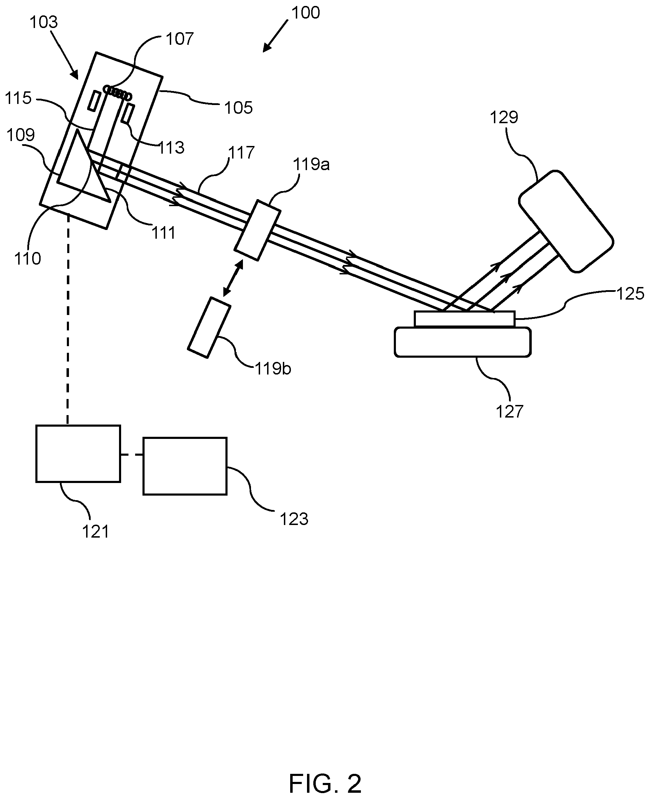

Figure 2 shows an X-ray analysis apparatus 100 according to an embodiment of the invention including an X-ray source 103 (i.e., an X-ray tube), a steering arrangement 113, an X-ray optic 119a, a processor 121, a controller 123, and a sample holder 127. The X-ray source 103 includes a cathode 107 and an anode 109 enclosed in a sealed housing 105. In use, the cathode 107 emits an electron beam 115 which is incident on a target surface 111 of the anode 109 thereby irradiating an irradiated area 110 of the anode 109. The housing 105 includes a window arranged to allow some X-rays emitted by the anode to exit the housing 105 as a beam of X-rays 117.

The X-ray analysis apparatus 100 also includes an X-ray detector 129. The X-ray detector 129 is arranged to receive scattered and/or diffracted X-rays from the sample 125.

In the embodiment shown in figure 2, the X-ray optic 119a is interchangeable with another X-ray optic 119b. Considering micro-focus X-ray tubes in particular, the X-ray tube is typically directly coupled (i.e. fixed) to the required X-ray optics, for example by screwing the X-ray optic directly to the X-ray tube. Providing a system with an interchangeable optic is advantageous because it means that the apparatus can be used for more X-ray analysis applications. However, since the X-ray optic is not permanently fixed relative to the X-ray source, and is generally indirectly coupled to the X-ray source, the relative positioning between the X-ray optic and source can be affected by the movement of various features (e.g., the X-ray source).

The X-ray analysis information comprises information about the type of X-ray optic 119a, 119b. Following a reconfiguration of the X-ray analysis apparatus where the interchangeable X-ray optic 119a, 119b is replaced with another, the processor 121 receives X-ray analysis information for identifying the type of X-ray optic 119a, 119b. The processor 121 is configured to determine a change in position of the irradiated area based on this identification. For example, the processor may determine that the position of the irradiated area on the anode should be shifted by 50 microns in one direction to facilitate an improved level of flux through the X-ray optic 119b. The controller 123 is configured to control the steering arrangement 113 to move the irradiated area 110 according to the shift determined by the processor 121. Thereby, the position of the focal spot on the sample is repositioned.

In some embodiments, the X-ray optics 119a, 119b are replaced manually by an operator. Alternatively, the X-ray analysis apparatus may comprise at least one actuator for removing and/or replacing the X-ray optic 119a, 119b. In some embodiments, the X-ray optic 119a, 119b is arranged to receive X-rays directly from the X-ray source. That is, the X-rays from the X-ray source do not pass through an intervening optic before reaching the X-ray optic 119a, 119b.

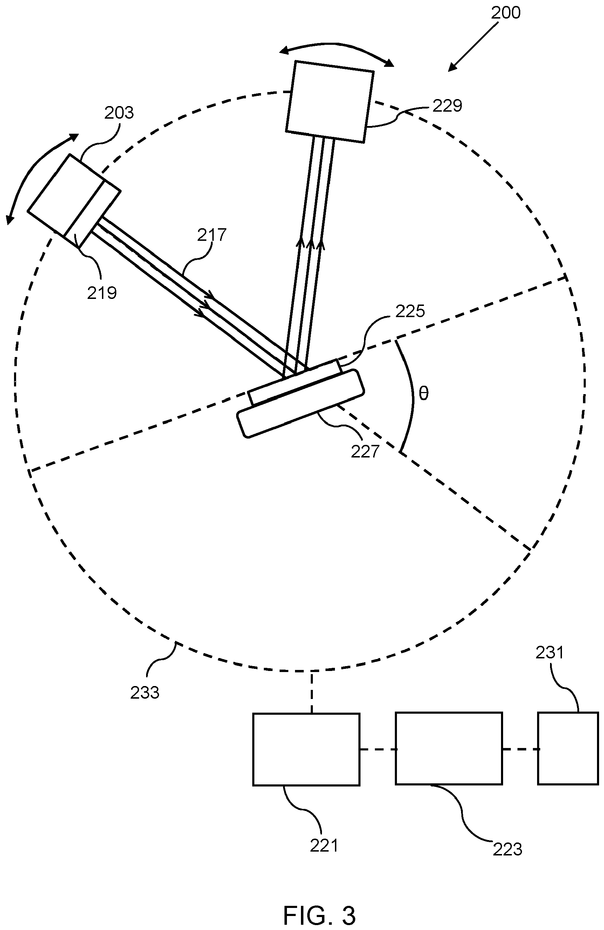

Figure 3 shows an X-ray analysis apparatus 200 according to an embodiment of the invention, wherein the X-ray analysis apparatus 200 includes a goniometer.

Goniometers generally include a rotatable incident arm for supporting the X-ray source and primary X-ray optics (i.e., X-ray optics arranged between the X-ray source and the sample) and a rotatable detector arm for supporting an X-ray detector. One problem with arrangements including a goniometer having rotatable arms is that the arms can experience deformation (e.g., bending due to differences in torsion). This bending is dependent on the orientation of the arm with respect to gravity. Further, the change in orientation of the rotatable incident arm can cause small shifts in the position of the X-ray optic compared to the X-ray source due to gravity.

Some goniometers have rotatable sample stages for facilitating orientation of the sample relative to the X-ray source/X-ray detector. The orientation of the sample stage can also affect the position X-ray focal spot on the sample.

In systems where both the sample stage and incident arm supporting the X-ray source and the X-ray optic are rotatable, ideally their axes of rotation would exactly intersect. However, in practice, there is typically a small gap between the axes which causes an unwanted variation in the position of the X-ray focal spot on the sample with respect to orientation of the X-ray source and/or sample stage.

The inventors have realised that these effects can be compensated for by controlling the position of the irradiated area based on information relating to the X-ray analysis apparatus. In particular, information relating to the orientation of the sample stage and the orientation of the X-ray source may be used to determine the appropriate compensation.

Figure 3 shows an X-ray source 203 and an X-ray optic 219 fixed to a first arm (not shown) of the goniometer and an X-ray detector 229 fixed to a second arm (not shown) of the goniometer. A beam of X-rays 217 is emitted from the X-ray source 203 towards a sample 225 positioned on a sample stage 227. Both arms of the goniometer are configured to rotate so that X-ray detector 229 and the X-ray source 203 together with X-ray optic 219 can move around the path 233 about a first axis of rotation in the θ direction. In this embodiment, the sample stage 227 is configured to rotate about a second axis of rotation which is perpendicular to the first axis of rotation, and a third axis of rotation which is perpendicular to both the first and second axes of rotation. In some embodiments, the sample stage 227 may be configured to rotate in the θ direction.

The X-ray analysis apparatus further includes a storage unit 231 comprising calibration data. The calibration data comprises a data structure that maps an input based on the X-ray analysis information to an adjustment output relating to a change in position of the irradiated area on the target surface of the anode (not shown). A processor 221 is configured to determine an adjustment output based on the X-ray analysis information and the calibration data, and a controller 223 is configured to generate a control signal for controlling the steering arrangement based on this adjustment output.

The X-ray analysis information comprises information indicating the orientation of the X-ray source 203 and the sample stage 227. The calibration data comprises a data structure, such as a look up table, for mapping the orientation information to an adjustment output. For example, the adjustment output is a control signal used as input to the controller which, when executed, controls the steering arrangement to adjust the position of the irradiated area. Alternatively, the adjustment output may be used to prompt the operator to provide an input to the controller (e.g. by selecting control options to be executed by the controller). Accordingly, the position of the irradiated area is steered based on the orientation of the X-ray source 203 and the sample stage 227.

In some embodiments, the X-ray analysis information may comprise the position of the X-ray focal spot on the sample. The position of the focal spot may be determined by reference measurements as components of the X-ray apparatus are moved. Unwanted variation in the position of the focal spot can be compensated for by steering the electron beam based on X-ray analysis information relating to this information.

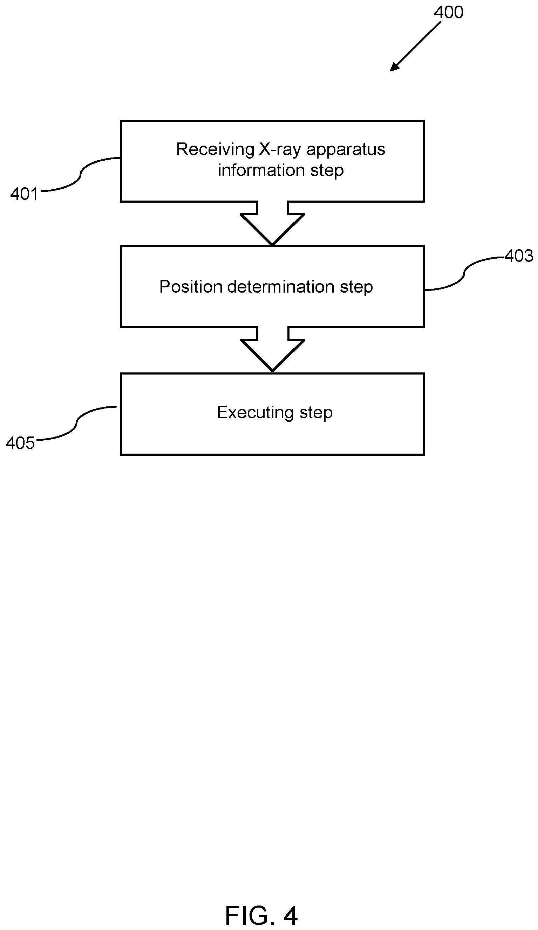

Figure 4 illustrates a method of X-ray analysis 400 according to an embodiment of the invention. In a receiving X-ray analysis information step 401, the processor receives X-ray analysis information. The X-ray analysis information may comprise information about the position and/or orientation and/or type of at least one X-ray analysis apparatus component. For example, the X-ray analysis information may comprise the type of X-ray optic, the type of focusing arrangement, and/or the model of the X-ray tube. In some embodiments, the information may indicate the relative orientation and/or positioning of the X-ray source and/or sample stage.

In a position determination step 403, the processor determines a change in position of the irradiated area based on the X-ray analysis information received by the processor. This may be achieved using an algorithm or a data structure. For example, the processor may determine that based on the relative orientation of the X-ray source and the sample stage, the position of the irradiated area on the anode should be shifted to compensate for deformation of an incident arm supporting the X-ray source and optic. This shift may be calculated using the orientation of the incident arm as an input to an algorithm. In an executing step 405, the controller is configured to execute a control signal for controlling the steering arrangement such that the position of the irradiated area is changed according to the change in position determined by the processor. For example, the position of the irradiated area may be changed according to the shift calculated by the processor. Thereby, the focal spot on the sample is shifted and compensation for the incident arm deformation is provided.

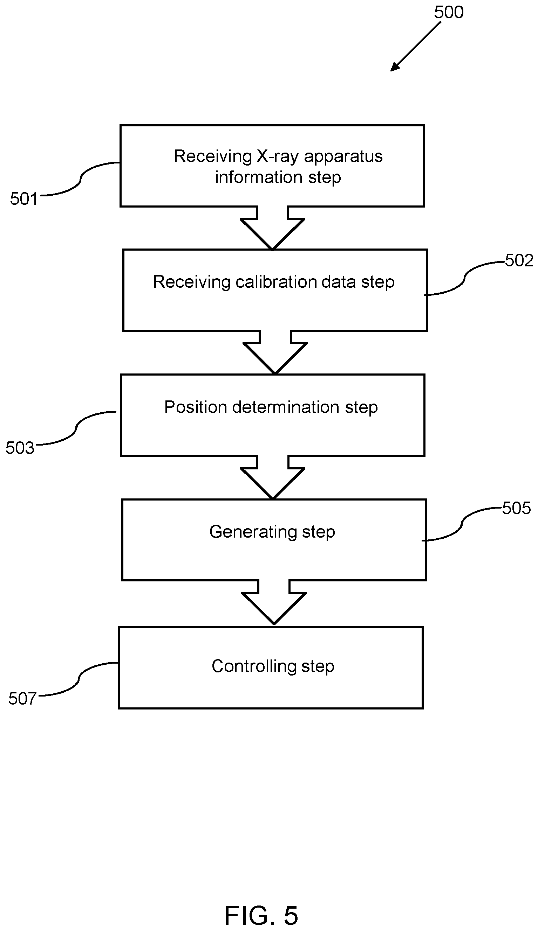

Figure 5 illustrates a method of X-ray analysis 500 according to another embodiment of the invention. This embodiment includes a receiving calibration data step 502 involving the processor receiving calibration data relating to the X-ray analysis apparatus. The calibration data comprises a data structure that maps an input based on the X-ray analysis information received during an X-ray analysis information step 501 to an adjustment output relating to the change in position of the irradiated area. The position determination step 503 involves determining an adjustment output relating to the change in position based on the data structure. In a subsequent generating step 505 the controller generates a control signal based on the adjustment output. The adjustment output may be used directly as an input to the controller. Alternatively, the processor may be configured to perform an algorithm to calculate the input to the controller based on the adjustment output.

In a controlling step 507, the controller executes the control signal to control the steering arrangement such that the position of the irradiated area is changed according to the change in position determined by the processor.

For example, in embodiments comprising a rotatable incident arm for supporting an X-ray source and an X-ray optic, the calibration data may include a table providing the corresponding shift in the position of the irradiated area required to compensate for misalignment at each angular position of the rotatable incident arm. The position determination step 503 then involves determining the adjustment output (i.e., the shift required) based on this calibration data and X-ray analysis information comprising the orientation of the incident arm. In the generating step 505 the controller generates a control signal based on the shift calculated in the position determination step 503.

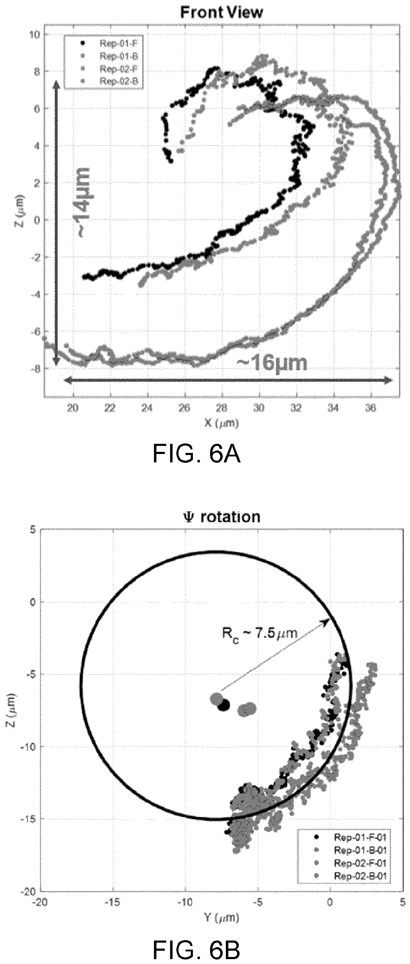

Figure 6A illustrates the variation of an X-ray focal spot on a sample in with respect to rotation of an incident arm supporting the X-ray source with a closely coupled X-ray optic. Figure 6B illustrates the variation of an X-ray focal spot on a sample with respect to rotation of a sample stage that is moving about an axis perpendicular to the theta axis whilst the incident arm is fixed. Since both axes are not perfectly intersecting (i.e., the axes are separated by a small gap) the measurement spot is moving on a section of a circle. The measurement set up for obtaining this data involved a so-called laser based autocollimator set-up in which the projected position of a reference ball at the measurement spot is determined during movement of the axes. Figures 6A-6B illustrate the unwanted variation in the position of the sample spot on a sample that may be observed using different experimental set-ups without compensation. Variation on the order of tens of microns, such as that shown in figures 6A-6B, can be problematic for applications where precise positioning of the measurement spot on the sample is important. By steering the electron beam based on X-ray analysis information, it is possible to compensate for this variation.

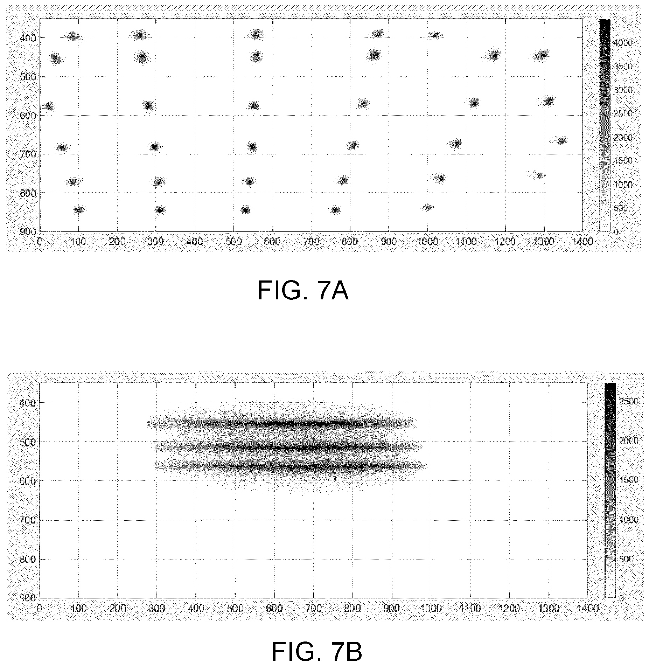

Figure 7A illustrates shifts in the position of the irradiated area (in this example, the irradiated area is a substantially round focal spot) over the target surface of the anode provided by steering and focussing the electron beam using a magnetic quadrupole arrangement. Figure 7B illustrates shifts in the position of the irradiated area (in this example, the irradiated area is a line focus) over the target surface of the anode provided by steering and focussing the electron beam using a magnetic quadrupole arrangement.

It should be appreciated that the embodiments described herein are not restricted to a specific type of X-ray analysis. The X-ray analysis apparatus and methods according to embodiments of the invention are suitable for: micro spot phase analysis, spot mapping, micro spot stress and texture analysis, and high-resolution thin film analysis. The X-ray analysis apparatus and methods according to embodiments of the invention are also suitable for: small angle x-ray scattering (SAXS), grazing incidence small angle x-ray scattering (GI-SAXS, reflectivity, in-plane analysis, X-ray diffraction, X-ray fluorescence, and combined X-ray diffraction and X-ray fluorescence analysis, for example.)

It will be appreciated that although figure 1 shows an X-ray analysis apparatus in which the steering arrangement and the focussing arrangement are arranged inside the housing, in some embodiments the steering arrangement and/or focussing arrangement may be arranged outside of the housing. The skilled person will understand that magnetic focussing and/or steering arrangements may be arranged either inside or outside of the housing, whereas electric focussing and/or steering arrangements may only be arranged inside the housing.

In some embodiments, the steering arrangement may comprise a magnetic quadrupole arrangement. A magnetic quadrupole field can be provided by arranging four magnetic sources around the electron beam. Each of these magnetic sources may be electrically conductive coils, wherein the controller is configured to control the current and/or voltage supplied to each coil to move the irradiated area according to the change in position determined by the processor.

It will be appreciated that, in general, the steering arrangement can be any type of arrangement suitable for steering the electron beam. For example, the steering arrangement may be a magnetic quadrupole arrangement, a magnetic dipole arrangement, or a steering arrangement which uses electric fields to steer the electron beam. In particular, it will be appreciated that the magnetic steering arrangement shown in figure 1 could comprise a magnetic quadrupole arrangement instead of a magnetic dipole arrangement. Alternatively, the steering arrangement shown in figure 1 could comprise an electric steering arrangement instead of a magnetic steering arrangement, whereby electric fields are used to steer the electron beam. For example, the steering arrangement may use an electric dipole field to steer the electron beam.

In some embodiments, a magnetic dipole arrangement may be used in combination with a separate quadrupole arrangement. That is, the focusing arrangement comprises a magnetic quadrupole arrangement and the steering arrangement comprises a magnetic dipole arrangement.

In some embodiments, a magnetic quadrupole arrangement can be used to provide focussing of the electron beam as well as steering of the electron beam. That is, the magnetic quadrupole arrangement is both a focussing arrangement and a steering arrangement.

In some embodiments, the anode is a solid anode. In other embodiments, the anode may be a liquid anode (e.g. a liquid jet anode) rather than a solid anode.

In some embodiments, the anode is stationary. In other embodiments the anode is a rotating anode. In some embodiments comprising a rotating anode, the X-ray source does not comprise a sealed housing.

It will be appreciated that although figure 2 shows an X-ray detector for receiving X-rays diffracted and/or scattered by the sample, the X-ray detector could alternatively be an X-ray detector for receiving fluorescence emitted by the sample. In those embodiments, the X-ray detector may be arranged directly above the sample, or in an alternative position.

In some embodiments the X-ray analysis apparatus may be arranged in transmission geometry rather than in reflection geometry. That is, the X-ray detector may be arranged on the opposite side of the sample in comparison to the arrangements shown in figures 1-3 (which show reflection geometry).

It will be appreciated that although figure 3 shows a storage unit for storing calibration data as a separate entity to the X-ray source, the X-ray source may further comprise a storage unit for storing the calibration data. Alternatively, the calibration data may be received from a cloud-based platform.

The skilled person will understand that the processor can determine the change of position based in the X-ray analysis information in any way. For example, the processor may determine the change in position using calibration data and/or a formula having predetermined or calculated parameters. It will be understood that where embodiments included using calibration data to calculate the change in position (e.g., the embodiment corresponding to figure 3) an algorithm may be used instead, and vice versa.

It should be understood that although the sample stage is described as being rotatable about two axes of rotation at the embodiment corresponding to figure 3, in some embodiments, the sample stage may have only a single axis of rotation or more than two axes of rotation.

It will be appreciated that although figure 5 includes a generating step wherein the controller generates a control signal, this step may be replaced by a receiving step for receiving the control signal (for example, from the processor).

Communication between the processor, controller and storage medium may be wired or wireless.

Functions implemented by a processor may be implemented by a single processor or by multiple separate processing units which may together be considered to constitute a "processor". Such processing units may in some cases be remote from each other and communicate with each other in a wired or wireless manner.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Determining effective focal spot size and area

The effective focal spot size is the larger of the length and width of the focal spot, as seen from a measuring device.

The size of the effective focal spot can be determined by an indirect measurement, by measuring geometric unsharpness.

The test method is conducted by imaging sharp edges of a test object. An X-ray image of a highly absorbing test object is obtained, and the size of the effective focal spot is determined using an intensity profile of the image.

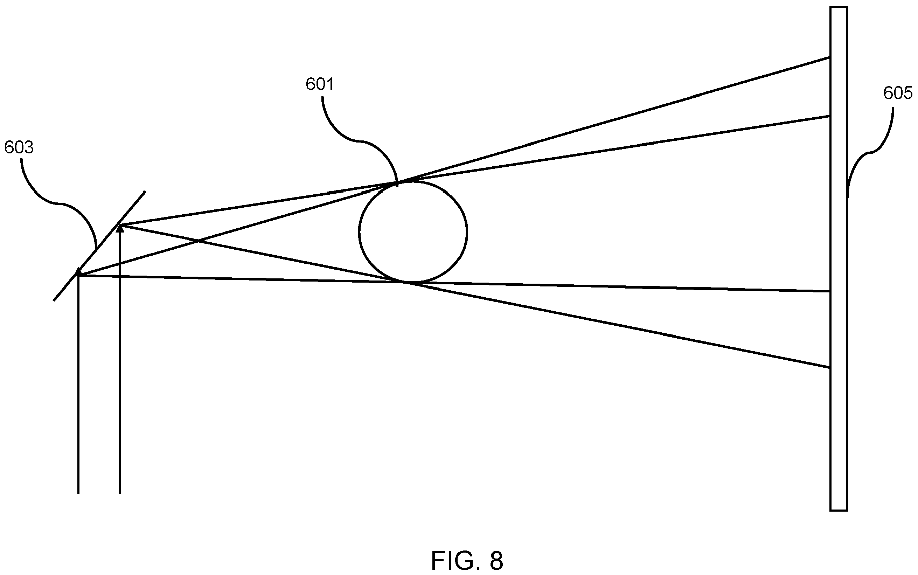

Referring to figure 8, a test object is arranged between the output window of the X-ray tube (not shown) and the detector 605, so as to be irradiated by X-rays emitted from the anode 603. The X-ray tube operating voltage may depend on the operating power of the X-ray tube, and is in any case less than 225 kV. The test object 601 is a spherical ball of tungsten, and has a diameter of 0.9 mm. The ball is mounted on a polyethylene support, at a distance of at least 4.5 cm from the focal spot on the anode. The distance between the test object and the detector 305 enables a projective magnification of between 20X and 100X, wherein the magnification is adjusted to optimise image sharpness (a larger magnification may be required for a relatively small focal spot). The projective magnification is the ratio of the distance from the X-ray tube anode to the detector to the distance from the X-ray tube anode to the test object.

An image of the test object is captured by the detector, and an image processor is used to produce a linear intensity profile in a length direction and a linear intensity profile in a width direction. More specifically, the linear intensity profiles are obtained in the length and width directions along the centre of the image (in the central length direction, and in the central width direction).

The line scan of the image in the central length direction is the intensity profile of the X-ray image, along the centre of the image, in a direction parallel to the longitudinal axis of the X-ray tube. If the longitudinal axis of the X-ray tube is not defined, the central length direction is parallel to the electron trajectory. The width direction is perpendicular to the length direction.

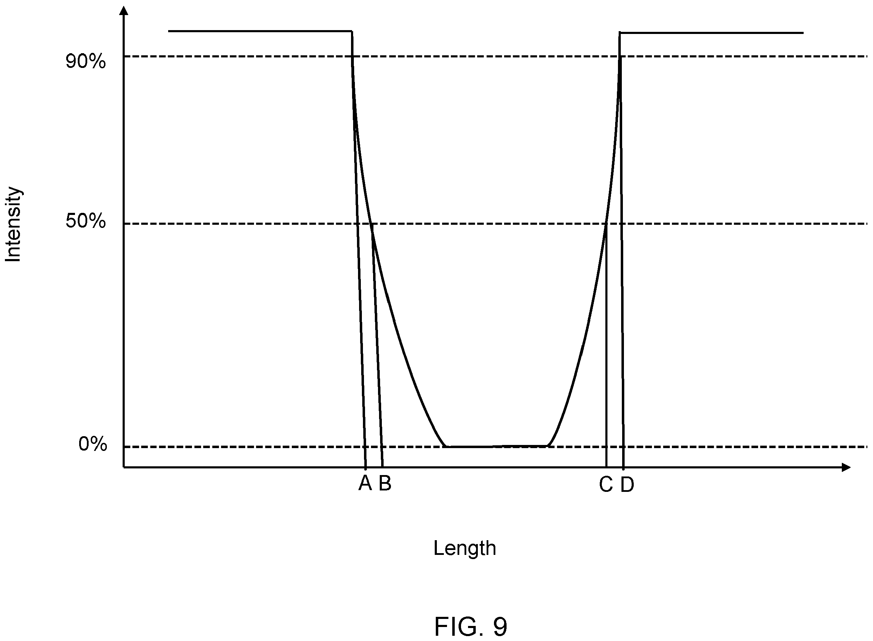

The image processor then determines the diameter of the test object at 50% of total image contrast by measuring the distance between the two relevant points on the line. For example, in figure 9, which shows the line scan in the length direction, the diameter in the length direction ($D_l$) is the distance between points B and C.

Next, two further points (A and D in figure 9 are obtained at 90% contrast. The focal spot sizes l and w are then calculated using equations (1) and (2).

$$l = \frac{(\overline{AB} + \overline{CD})}{M_l} \qquad\qquad (1)$$

$$w = \frac{(\overline{AB} + \overline{CD})}{M_w} \qquad\qquad (2)$$

$\overline{AB}$ is the distance between points A and B. $\overline{CD}$ is the distance between points C and D. $M_l$ is the geometrical magnification, which is equal to the ratio between the measured diameter ($\overline{BC}$) in the length direction at 50% of the total image contrast and the real diameter (0.9 mm). $M_w$ is the geometrical magnification, which is equal to the ratio between the measured diameter in the width direction at 50% of the total image contrast and the real diameter (0.9 mm).

The skilled person will appreciate that the term "spot" in "focal spot" does not necessarily refer to a round shape, but may instead refer to any two-dimensional shape. As used herein, the area of the effective focal spot is the product of the measured length and the measured width (regardless of the shape of the focal spot).

**Claims**

1. An X-ray analysis apparatus comprising:

   an X-ray source for irradiating a sample with X-rays, wherein the X-ray source comprises an anode for generating X-rays and a cathode for emitting an electron beam towards the anode to irradiate an irradiated area on a target surface of the anode;
   a steering arrangement for positioning the irradiated area on the target surface of the anode;
   a processor configured to receive X-ray analysis information, and to determine a change in position of the irradiated area on the target surface based on the X-ray analysis information; and
   a controller configured to control the steering arrangement to move the irradiated area on the target surface according to the change in position determined by the processor.

2. The X-ray analysis apparatus according to claim 1, wherein the X-ray analysis information comprises information about the position and/or orientation and/or type of at least one component of the X-ray analysis apparatus and/or information relating to the position of an X-ray focal spot on the sample.

3. The X-ray analysis apparatus according to any preceding claim, wherein the steering arrangement is a magnetic steering arrangement, and optionally wherein the magnetic steering arrangement comprises a magnetic quadrupole arrangement or a magnetic dipole arrangement..

4. The X-ray analysis apparatus according to claim 3, wherein the magnetic steering arrangement comprises a magnetic quadrupole arrangement and the magnetic quadrupole arrangement comprises four coils;

   wherein each coil is electrically conductive; and
   wherein the controller is configured to control the current and/or voltage supplied to each coil to move the irradiated area according to the change in position determined by the processor.

5. The X-ray analysis apparatus according to any preceding claim, wherein the effective focal spot size is less than 100 $\mu$m.

6. The X-ray analysis apparatus according to any preceding claim wherein the processor is configured to receive calibration data relating to the X-ray analysis;

   wherein the calibration data comprises a data structure that maps an input based on the X-ray analysis information to an adjustment output relating to the change in position;
   wherein the processor is configured to determine an adjustment output based on the X-ray analysis information and the calibration data, and output the adjustment output.

7. The X-ray analysis apparatus according to claim 6 further comprising a sample stage for supporting the sample, wherein the sample stage is rotatable;

   wherein the X-ray analysis information comprises information indicating the orientation of the sample stage;
   wherein the processor is configured to determine the adjustment output based on the orientation of the sample stage and the calibration data.

8. The X-ray analysis apparatus according to any preceding claim, further comprising an X-ray optic arranged to receive X-rays from the X-ray source.

9. The X-ray analysis apparatus of any of claims 1-5 further comprising:

   an X-ray optic arranged to receive X-rays from the X-ray source;
   a sample stage for supporting the sample, and an incident arm for supporting the X-ray source and the X-ray optic;
   wherein the incident arm is rotatable about the sample stage;
   wherein the X-ray analysis information comprises information indicating the incident arm orientation;
   wherein the processor is configured to receive calibration data relating to the X-ray analysis apparatus;
   wherein the calibration data comprises a data structure that maps an input based on the X-ray analysis information to an adjustment output relating to the change in position; and
   wherein the processor is configured to determine the adjustment output based on the information indicating the incident arm orientation and the calibration data, and output the adjustment output.

10. The X-ray analysis apparatus of any of claims 1-5 further comprising:

    an X-ray optic arranged to receive X-rays from the X-ray source;
    a goniometer comprising a sample stage for supporting the sample and an incident arm for supporting the X-ray source and the X-ray optic;
    wherein the sample stage is rotatable about a first axis of rotation, and the incident arm is rotatable about a second axis of rotation;
    wherein the X-ray analysis information comprises information indicating the orientation of the sample stage about the first rotation axis, and the incident arm orientation about the second rotation axis;
    wherein the processor is configured to receive calibration data relating to the X-ray analysis apparatus;
    wherein the calibration data comprises a data structure that maps an input based on the X-ray analysis information to an adjustment output relating to the change in position; and
    wherein the processor is configured to determine the adjustment output based on the orientation of the sample stage, the orientation of the incident arm, and the calibration data; and output the adjustment output.

11. The X-ray analysis apparatus according to any of claims 8-10,
    wherein the processor is configured to determine the change in position of the irradiated area on the target surface by receiving, as an input, X-ray analysis information relating to an X-ray flux through the X-ray optic, and determining, as an output, a change in position corresponding to an increase in X-ray flux through the X-ray optic.

12. The X-ray analysis apparatus according to any of claims 8-11, wherein the X-ray optic is interchangeably coupled to the X-ray source.

13. A computer implemented method for controlling an X-ray analysis apparatus configured to focus an electron beam to an irradiated area on a target surface comprising:

    receiving, by a processor, X-ray analysis information;
    determining, by the processor, a change in position of the irradiated area;
    executing, by a controller, a control signal for controlling a steering arrangement such that the position of the irradiated area is changed according to the change in position determined by the processor.

14. The computer implemented method of claim 13, wherein the X-ray analysis apparatus is the X-ray analysis apparatus of any of claims 1 to 12.

15. A computer program product comprising instructions which, when the program is executed by a computer, cause the computer to carry out the steps of the method of claim 13 or claim 14.

FIG. 1

FIG. 2

FIG. 3

400

Receiving X-ray apparatus
information step

401

Position determination step

403

Executing step

405

FIG. 4

500

Receiving X-ray apparatus
information step

501

Receiving calibration data step

502

Position determination step

503

Generating step

505

Controlling step

507

FIG. 5

**Front View**

FIG. 6A

**Ψ rotation**

FIG. 6B

FIG. 7A

FIG. 7B

FIG. 8

EP 4 425 158 A1

FIG. 9

Europäisches
Patentamt

European
Patent Office

Office européen
des brevets

# EUROPEAN SEARCH REPORT

**Application Number**

EP 23 15 9987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/318652 A1 (MEILER MICHAEL [US] ET AL) 2 November 2017 (2017-11-02) <br> * abstract * <br> * paragraph [0076] – paragraph [0162] * <br> * figure 1 * <br> ----- | 1-15 | INV. <br> G01N23/20008 <br> H01J35/14 |

|  |  |  | TECHNICAL FIELDS SEARCHED (IPC) |
|---|---|---|---|
|  |  |  | G01N <br> H01J |

The present search report has been drawn up for all claims

| Place of search | Date of completion of the search | Examiner |
|---|---|---|
| The Hague | 20 July 2023 | Appeltant, Lennert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9987

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2023

| Patent document cited in search report | | Publication date | Patent family member(s) | | Publication date |
|---|---|---|---|---|---|
| US 2017318652 | A1 | 02-11-2017 | CN | 107452583 A | 08-12-2017 |
| | | | EP | 3240012 A2 | 01-11-2017 |
| | | | JP | 6542287 B2 | 10-07-2019 |
| | | | JP | 2018010857 A | 18-01-2018 |
| | | | US | 2017318652 A1 | 02-11-2017 |

EPO FORM P0459

For more details about this annex : see Official Journal of the European Patent Office, No. 12/82